# EUROPÄISCHE PATENTANMELDUNG

(11) **EP 1 792 945 A1**
(43) Veröffentlichungstag der Anmeldung: **06.06.2007**
(21) Anmeldenummer: 06024140.3
(22) Anmeldetag: 21.11.2006
(51) Int. Cl.: C08L 95/00

(54) **Bitumenhaltiges Bindemittelgemisch und Verfahren zu seiner Herstellung**

(30) Priorität: 05.12.2005 DE 102005058017
(71) Anmelder: Carl Ungewitter Trinidad Lake Asphalt GmbH & Co. KG, 28195 Bremen (DE); Lucobit AG, 50389 Wesseling (DE)
(72) Erfinder: Knöbig, Andreas, 28335 Bremen (DE)
(74) Vertreter: Fritsche, Rainer

(57) **Zusammenfassung**

Es wird ein bitumenhaltiges Bindemittelgemisch offenbart, welches Straßenbaubitumen, Naturasphalt und gegebenenfalls weitere übliche Zusätze enthält und gekennzeichnet ist durch einen Gehalt eines Ethlyen Copolymer Bitumens von 0,1 bis 15 M.-%, bezogen auf die Summe aus Straßenbaubitumen, Naturasphalt und Ethylen Copolymer Bitumen. Gemäß einer Ausführungsform hat der Straßenbaubitumen die Penetrationssorten 30/45, 50/70 oder 70/100 nach DIN EN 12591.

## Beschreibung

Die Erfindung betrifft ein bitumenhaltiges Bindemittelgemisch und ein Verfahren zu seiner Herstellung.

Asphalt ist ein Gemisch aus Bitumen oder bitumenhaltigen Bindemitteln und Mineralstoffen sowie gegebenenfalls weiteren Zuschlägen oder Zusätzen. Es gibt Naturasphalte, bei dem das Bindemittel durch Verdunstung leichtflüchtiger Anteile des Erdöls und oxidative Polymerisation der schwer flüchtigen Rückstände auf natürlichem Wege entstanden ist (z.B. Trinidad Naturasphalt, Gilsonite, Uintaite). Teilweise enthalten Naturasphalt auch Mineralstoffe in unterschiedlichen Mengen von 1 bis 46 M.-% (Masseprozent). Der Wortteil "Asphalt" wird teilweise missverständlich verwendet. Dies ist bedingt durch die englischsprachige Herkunft des Wortes. Zum anderen gibt es industriell gefertigten Asphalt, bei dem petrochemisch hergestelltes Bitumen oder synthetisches Erdölbitumen (auch Raffineriebitumen oder Strassenbaubitumen genannt) vermischt mit Mineralstoffen industriell hergestellt wird. Das bekannte Vorkommen von Naturasphalt mit einem Gehalt von im Mittel 46 M.-% Mineralsstoffe und 54 M.-% Naturbitumen findet sich im Asphaltsee der Insel Trinidad.

Eine wichtige technische Verwendung von Asphalt liegt in der Herstellung von Flächenbefestigungen (Straßen, Flugplätze und dergleichen). Hier gibt es intensive Bemühungen zur Verbesserung der Eigenschaften von Strassenbaubitumen, beispielsweise in Gestalt polymermodifizierter Bitumen. In der Praxis werden auch regelmäßig Gemische aus Strassenbaubitumen, polymermodifizierter Bitumen und Naturasphalt eingesetzt, wobei jedoch ein Mindestanteil an Naturasphalt eine wichtige Voraussetzung für ein qualitativ hochwertiges Asphaltgemisch ist. Es besteht ein ständiger Bedarf für die Verbesserung der anwendungstechnischen Eigenschaften solcher Bindemittelgemische.

Die Erfindung stellt sich die Aufgabe, ein neues bitumenhaltiges Bindemittelgemisch und ein Verfahren zu seiner Herstellung zur Verfügung zu stellen.

Diese Aufgabe wird gelöst mit einem bitumenhaltigen Bindemittelgemisch gemäß Anspruch 1 sowie mit dem Verfahren gemäß Anspruch 7. Weiterbildungen des Bindemittelgemisches bzw. des Verfahrens sind in den Unteransprüchen angegeben.

Gegenstand der Erfindung ist ein bitumenhaltiges Bindemittelgemisch. Es enthält Straßenbaubitumen, Naturasphalt und gegebenenfalls weitere übliche Zusätze und ist gekennzeichnet durch einen Gehalt eines Ethlyen Copolymer Bitumens von 0,1 bis 15 M.-% (Masseprozent), bezogen auf die Summe aus Straßenbaubitumen, Naturasphalt und Ethylen Copolymer Bitumen.

Unter "Ethylen Copolymer Bitumen" (üblicherweise abgekürzt als "ECB") wird eine Klasse von bitumenmodifizierten Polyethylencopolymeren verstanden, bei denen das Bitumen im Sinne eines Gemisches homogen in die Polymermatrix eingelagert ist. Das Gemisch ist als rieselfähiges Granulat verfügbar. Zur Spezifikation dient DIN 16729. Im Handel verfügbar ist z.B. das Produkt "Lucobit®" der Lucobit AG. Von gewissem Interesse ist auch "Sasobit" von Moore & Munger, Inc., USA, weil es zu vergleichbaren Ergebnissen führt.

Sasobit ist jedoch kein ECB, sondern ein FT-Wachs (Fischer-Tropsch-Wachs). Vorliegend wurde in drei Arbeitsbeispielen parallel Sasobit eingesetzt. Die erhaltenen Ergebnisse werden mitgeteilt.

Bekannt und gut beschrieben ist z.B. der Einsatz von ECB-Materialien für Abdichtungszwecke im Hoch- und Tiefbau. Im Zuge der zu dieser Patentanmeldung führenden Entwicklungsarbeiten wurde die Eignung von ECB-Materialien für die genannten Flächenbefestigungen (Straßen, Flugplätze und dergleichen) mit dem überraschenden Ergebnis untersucht, dass der Zusatz von ECB zu einem bitumenhaltigen Bindemittelgemisch zu einer nicht erwarteten Verbesserung der mechanisch/thermischen Eigenschaften des Bindemittelgemisches führt. Wie bei der Diskussion des experimentellen Materials noch zu diskutieren sein wird, ergeben sich insbesondere eine Verbesserung (d.h. Erhöhung) des Erweichungspunktes sowie eine Verbesserung (d.h. Erniedrigung) der Nadelpenetration nach DIN EN 12591. Bindemittelgemische mit ECB-Zusatz liegen im Allgemeinen um mindestens eine Penetrationsklasse (Nadelpenetration) besser als der Straßenbaubitumen, aus dem sie hergestellt wurden. Dies gilt entsprechend auch für den Erweichungspunkt Ring und

Kugel (EP RuK).

Gemäß einer Ausführungsform der Erfindung ist der Straßenbaubitumen ein Straßenbaubitumen der Penetrationssorten 30/45, 50/70 oder 70/100 nach DIN EN 12591 und hat bevorzugt die Zusammensetzung 78 bis 97 M.-% Straßenbaubitumen, 2 bis 20 M.-% Naturasphalt, wobei der Rest Ethylen Copolymer Bitumen ist. Eine andere bevorzugte Zusammensetzung ist 83 bis 92 M.-% Straßenbaubitumen, 7 bis 15 M.-% Naturasphalt mit Ethylen Copoylmer Bitumen als Rest. Gemäß einer weiteren bevorzugten Ausführungsform handelt es sich bei dem Naturasphalt um Trinidad Lake Asphalt (TLA).

Gegenstand der Erfindung ist außerdem ein Verfahren zur Herstellung eines bitumenhaltigen Bindemittelgemisches. Das Verfahren ist dadurch gekennzeichnet, dass das Straßenbaubitumen und der Naturasphalt durch Rühren gemischt und das Ethylen Copolymer Bitumen in das entstandene Gemisch eingerührt wird. Das Einmischen kann bei einer Temperatur von 90 bis 260 °C erfolgen. Geeignet zum Rühren und Einmischen ist ein Korbrührer, der bei einer Rührgeschwindigkeit von 230 bis 270 min⁻¹ betrieben wird. Bevorzugt ist ein Zeitraum von 8 bis 12 min für das Mischen von Straßenbaubitumen und Naturasphalt und ein Zeitraum von 3 bis 17 Minuten für das Einrühren des Ethylen Copolymer Bitumens.

Weitere Merkmale, Vorteile und Anwendungsmöglichkeiten der Erfindung ergeben sich aus den nachfolgenden Anwendungsbeispielen zusammen mit den Figuren; es zeigen:
- Fig. 1 bis 8:: die Kraft-Weg-Duktilität von Proben gemäß den Beispielen 1 bis 8 bei 13 °C;
- Fig. 9 und 10:: die Kraft-Weg-Duktilität von Proben gemäß den Vergleichsbeispielen 1 und 2 bei 13 °C; und
- Fig. 11:: die Kraft-Weg-Duktilität von Proben gemäß den Beispielen 9 bis 11 bei 13 °C.

Für die nachfolgende Beschreibung bedeutet "härter" einen Straßenbaubitumen, der im Sinne von EN DIN 12591 einer Sorte mit geringerer Nadelpenetration und höherem Erweichungspunkt Ring und Kugel (EP RuK) angehört als ein damit verglichenes Straßenbaubitumen.

### Beispiele 1 bis 8

Es wurden acht Bindemittelgemische hergestellt, die Straßenbaubitumen 30/45 bzw. 50/70 als Straßenbaubitumen, steigende Mengen löslichen Bitumens aus Naturasphalt (TLA), sowie Zusätze in steigenden Mengen enthielten. Die Zusammensetzungen sind aus Tabelle 1 zu entnehmen (die angegebenen Zahlen bedeuten M.-%). Bei den Zusätzen handelte handelte es sich um Lucobit® (ECB) bzw. Sasobit.

Die Herstellung erfolgte in einem Korbrührer, in dem zunächst das Straßenbaubitumen und der Naturasphalt (TLA) vorgelegt und 10 Minuten lang bei160 °C und 250 min⁻¹ gemischt wurden. Dann erfolgte der Zusatz von Lucobit® oder Sasobit, die 15 Minuten lang bei 160 °C und 250 min⁻¹ eingemischt wurde.

Mit den hergestellten Bindemittelgemischen wurden der Erweichungspunkt Ring und Kugel (EP RuK), die Nadelpenetration, die Brechpunkt und die Kraftduktilität bestimmt. Die Ergebnisse sind ebenfalls in Tabelle 1 angegeben.

### Vergleichsbeispiele 1 und 2

Die Herstellung erfolgte in gleicher Weise wie bei Beispiel 1 bis 8, jedoch ohne Zusatz von Lucobit® oder Sasobit. Die Zusammensetzungen und Untersuchungsergebnisse sind wiederum in Tabelle 1 angegeben. Auch hier wurden der Erweichungspunkt Ring und Kugel, die Nadelpenetration, der Brechpunkt und die Kraftduktilität bestimmt.

### Beispiele 9 bis 11

Es wurden drei Bindemittelgemische hergestellt, die Straßenbaubitumen 70/100 als Straßenbaubitumen, Naturasphalt (TLA), sowie steigende Mengen an Ethylen Copolymer Bitumen (ECB) in Gestalt von Lucobit® enthielten. Die Zusammensetzungen und Messdaten sind wiederum aus Tabelle 1 zu entnehmen (Zahlen in M.-%). Die Herstellung erfolgte wie bei den Beispielen 1 bis 8.

### Vergleichsbeispiel 3

Als Referenz diente reiner Straßenbaubitumen 70/100 ohne Zusatz (siehe Tabelle 1).

### Diskussion der Untersuchungsergebnisse

Gemäß Tabelle 1 weist ein Straßenbaubitumen 30/45 mit einem Gehalt an ECB in Gestalt von Lucobit® in Höhe von 1,5 bzw. 3,0 M.-% einen Erweichungspunkt von 60,4 bzw. 64,4 °C, eine Penetration von 25 bzw. 13* 0,1 mm, einen Brechpunkt von - 5 bzw. - 4 °C, eine Duktilität bei 13 °C von 6 bzw. 1 cm sowie eine maximale Duktilität bei 13 °C von 94 bzw. 90 N auf (Beispiele 1 und 2). Die entsprechenden Werte für die Zugabe von 0,8 bzw. 1,5 M.-% Sasobit betragen 61,6 bzw. 67,4 °C, 19 bzw. 15 * 0,1 mm, - 4 bzw. - 4 C, 6 bzw. 1 cm und 120 bzw. 74 N (Beispiele 3 und 4), die für Vergleichsbeispiel 1 59,0 °C, 18 * 0,1 mm, - 7 °C, 7 cm und 87 N. Zur Verdeutlichung sind Daten von Beispielen unterstrichen, die als schlechter einzustufen sind als die des Vergleichsbeispiels. Insgesamt ergibt sich, dass bei Zusatz von 3,0 M.-% Lucobit® (Beispiel 2) nur zwei Parameter (Bruch und Duktilität) schlechter sind als bei Vergleichsbeispiel 1. Man erhält hier für den Brechpunkt eine Temperaturdifferenz von 3 °C und für die Duktilität eine Wegdifferenz von 6 cm. Im Fall von Sasobit sind bei den untersuchten Gehalten von 0,8 bzw. 1,5 M.-% jeweils drei Parameter schlechter, wobei es sich jedoch um unterschiedliche Parameter handelt (Beispiele 3 und 4).

Bei Straßenbaubitumen 50/70 ist zu erkennen, dass ein Gehalt von 1,5 M.-% Lucobit® (Beispiel 5) zu einer Verbesserung aller untersuchten Parameter führt. Bei 2,25 bzw. 3,0 M.-% (Beispiele 6 und 7) ist jeweils die Duktilität bei 13 °C um 2 bzw. 3 cm schlechter. Der untersuchte Gehalt von 0,8 % Sasobit (Beispiel 8) führt zu einer Verschlechterung der Penetration (2 * 0,1 mm) und der Bruchtemperatur (Temperaturunterschied 1 °C).

Die obige Diskussion der Beispiele 1 bis 8 und der Vergleichsbeispiele 1 und 2 auf der Grundlage der Daten von Tabelle 1 stellt einen Vergleich der Bindemittelgemische auf der Basis von Straßenbaubitumen 30/45 bzw. 50/70 mit Vergleichsbeispielen dar, die jeweils keinen Zusatz enthalten. Als Ergebnis ist festzuhalten, dass der Zusatz zu einer Verbesserung der meisten Parameter gegenüber den Vergleichsbeispielen führt, der bei Lucobit® und bei Straßenbaubitumen 50/70 am stärksten ausgeprägt ist. Die besten Ergebnisse erhält man im Fall von Straßenbaubitumen 30/45 mit einem ein Zusatz von etwa 3,0 M.-% Lucobit®, bei Straßenbaubitumen 50/70 mit einem von etwa 1,5 M.-% . Lucobit®.

Daneben ist in Tabelle 2 ein Vergleich der Beispiele 1 bis 8 mit den reinen (d.h. unveränderten) Sorten gemäß EN DIN 12591 dargestellt. Dies bedeutet, dass als Referenz nicht ein Bindemittelgemisch mit einem ECB-Zusatz von Null dient, sondern die in EN DIN 12591 enthaltenen Straßenbaubitumen 20/30 bis 160/220. Die Erweichungspunkte (EP RuK) sowie die Werte der Penetration sind für die jeweiligen Sorten zusammen mit den Daten für die gemäßen Beispiele 1 bis 11 angegeben. Wie zu erkennen ist, liegen die Werte EP RuK für die Beispiele 1 bis 4 im Bereich von 59,0 bis 67,4 °C, die Werte der Penetration im Bereich von 13 bis 25 * 0,1 mm. DIN/EN 12591 endet mit der Sorte 20/30, der Bereiche von 55 bis 63°C (EP RuK) sowie von 20 bis 30 * 0,1 mm (Nadelpenetration) zukommen. Die genannten Werte der Beispiele 1 bis 4 sind somit "härter" als die der Sorte 20/30. Während die Sorte 20/30 einen Bereich für EP RuK von 55 bis 63 verlangt, liegen die Beispiele 1 bis 4 bei 59,0 bis 67,4, d.h. bei höheren Erweichungstemperaturen. Das Gleiche gilt für die Nadelpenetration; die Beispiele 1 bis 4 liegen bei 13 bis 25, die Sorte 20/30 verlangt 20 bis 30. Es kann also gesagt werden, dass die Daten der Beispiele 1 bis 4 in Bezug auf beide Parameter (Nadelpenetration und EP RuK) einer Verbesserung von mehr als einer Sorte entsprechen: Das Material dieser Beispiele wurde aus Sorte 30/45 gewonnen und ist härter als Sorte 20/30. Eine entsprechende (härtere) Sorte existiert in DIN/EN 12591 nicht. Relevant wäre allenfalls die Sorte 10/15 gemäß DIN EN 13305.

Ähnlich verhält es sich mit den Beispielen 5 bis 8 auf der Basis von Straßenbaubitumen 50/70. Diesem Material käme nach DIN EN 12591 eine Nadelpenetration von 50 bis 70 * 0,1 mm und einen EP RuK von 46 bis 54 °C zu. Der Erweichungspunkt (EP RuK) der Beispiele 5 bis 8 beträgt 54,8 bis 60,2 °C, der der Nadelpenetration 23 bis 37 0,1 mm. Damit ist der EP RuK um eine Sorte härter, die Nadelpenetration jedoch um zwei Sorten.

Entsprechende Überlegungen gelten für die Beispiele 9 bis 11 auf der Basis von Straßenbaubitumen 70/100. Hier ist das Material der Beispiele bezüglich beider Parameter um jeweils eine Sorte härter.

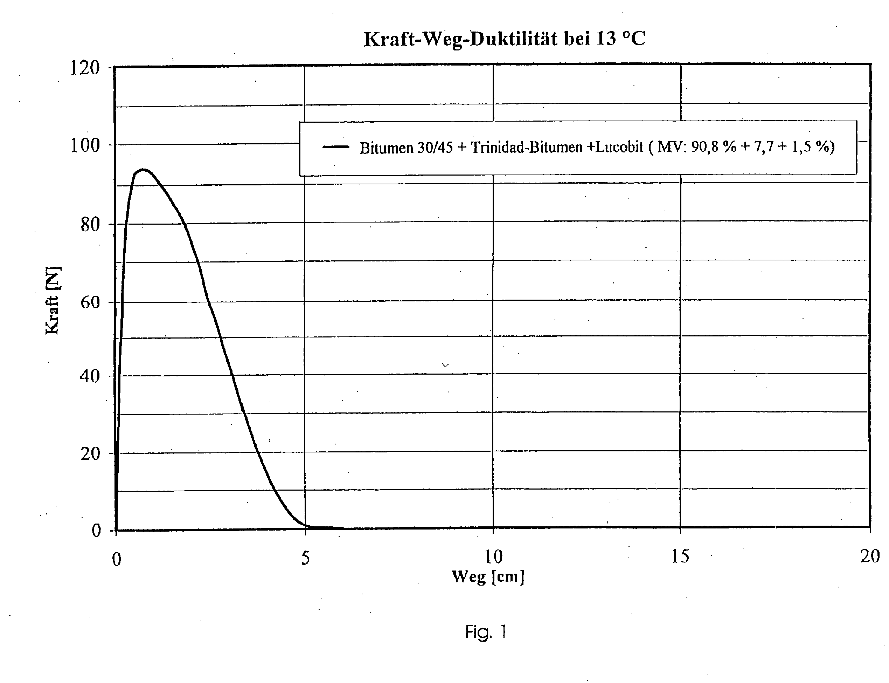

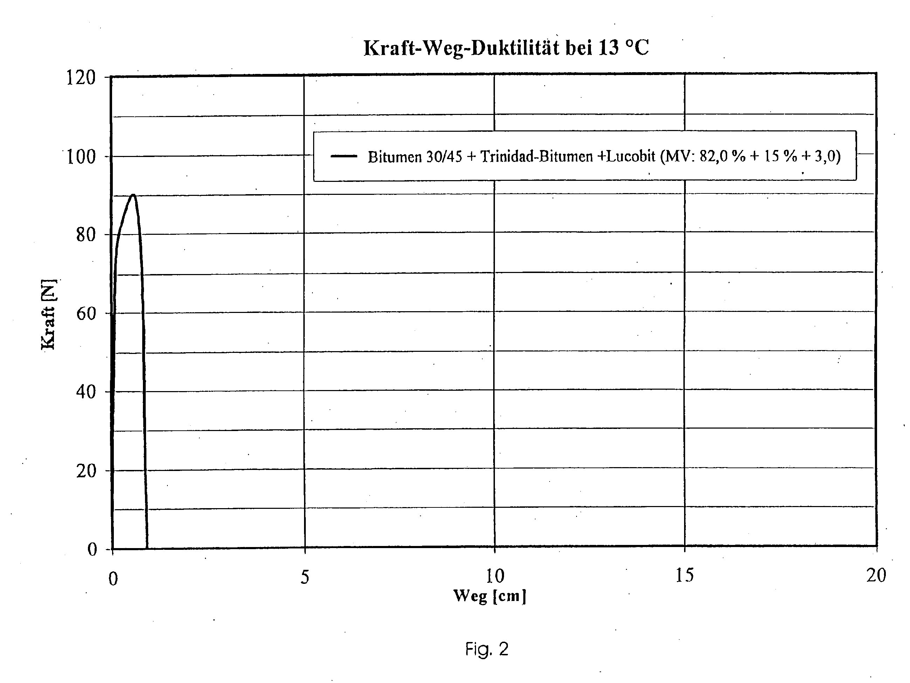

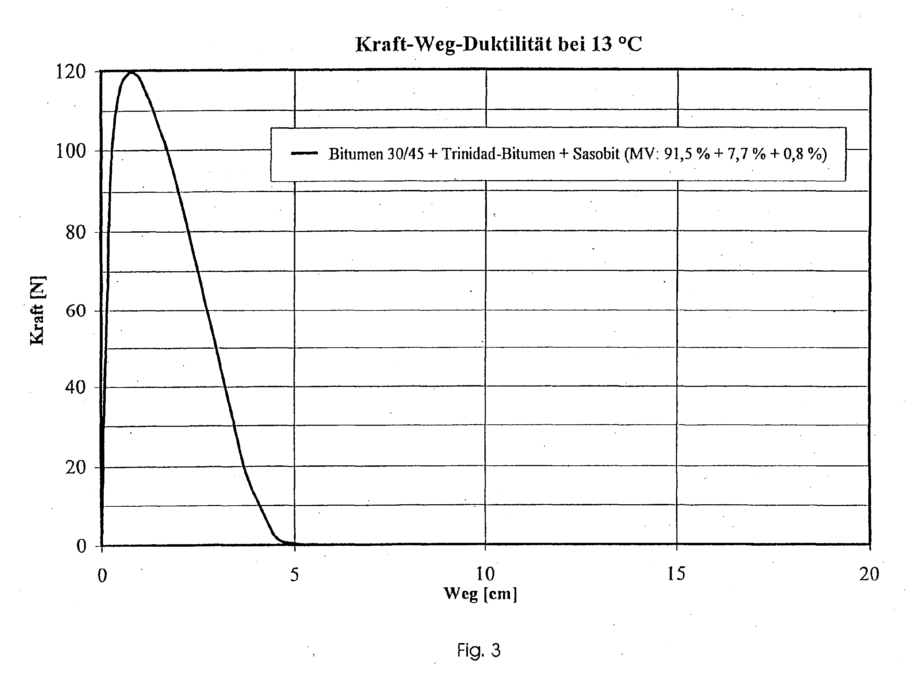

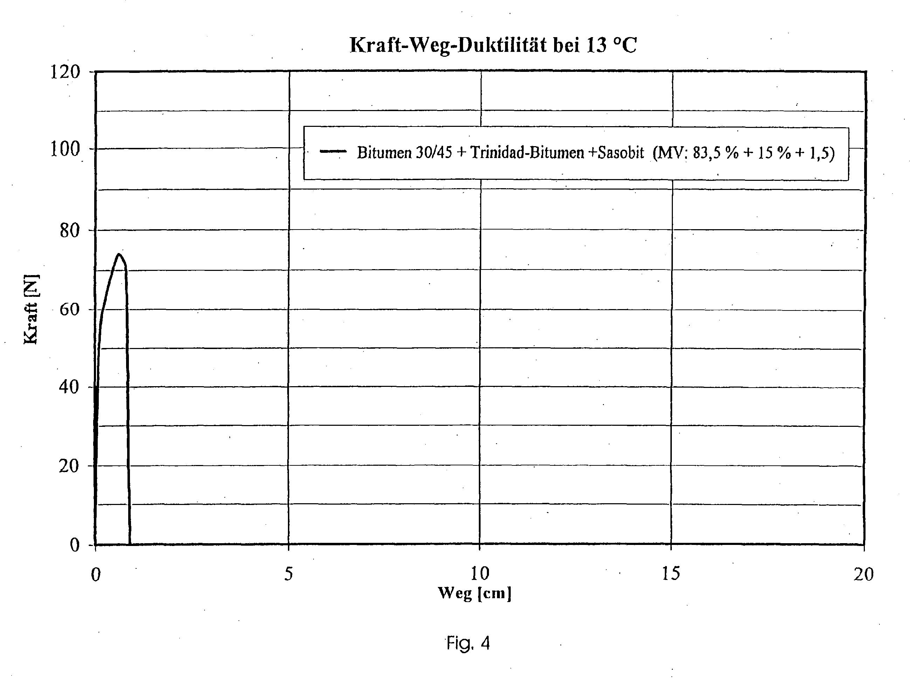

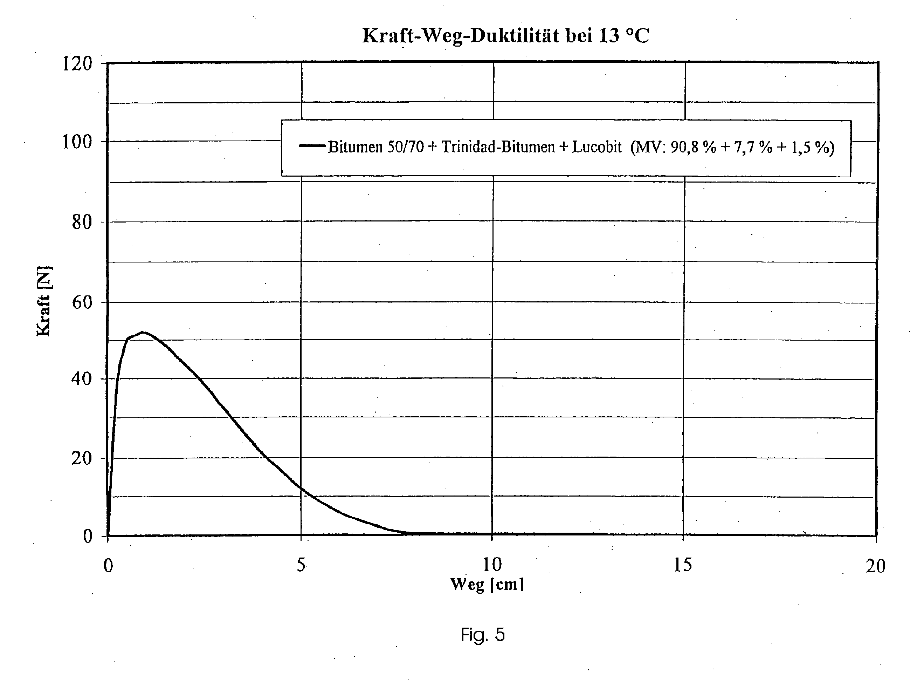

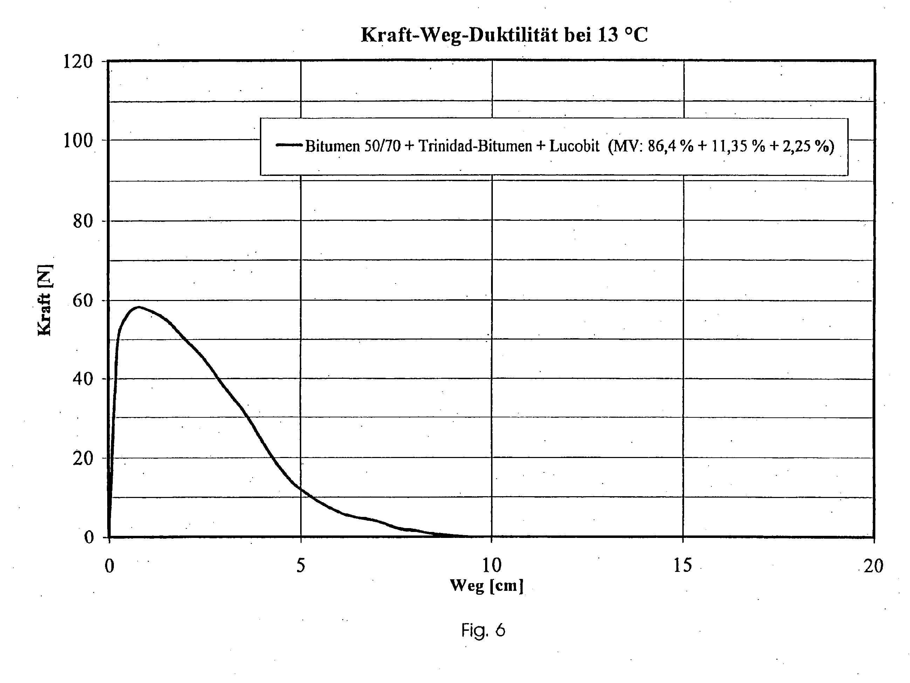

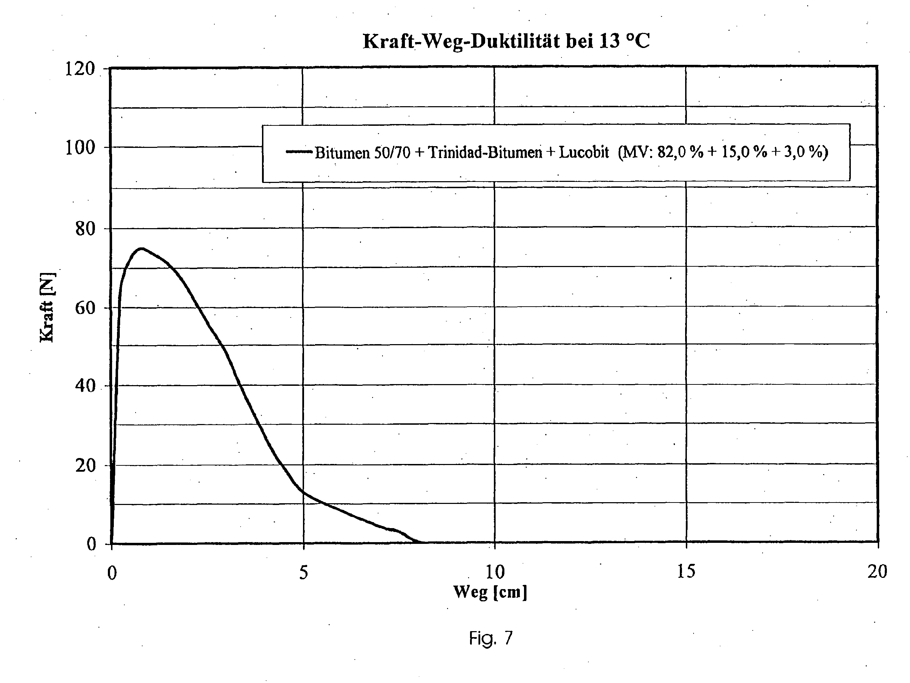

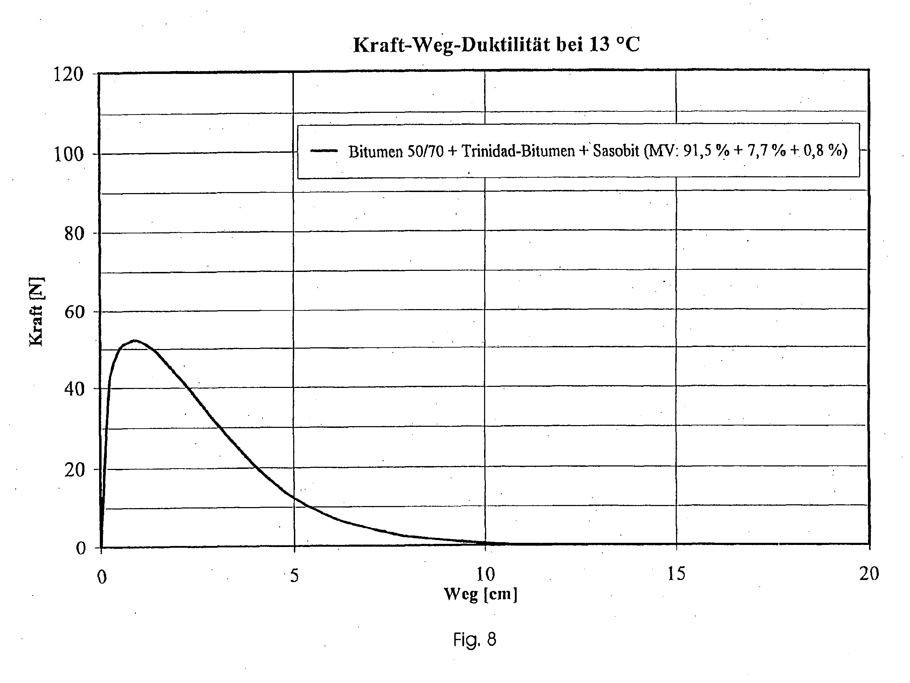

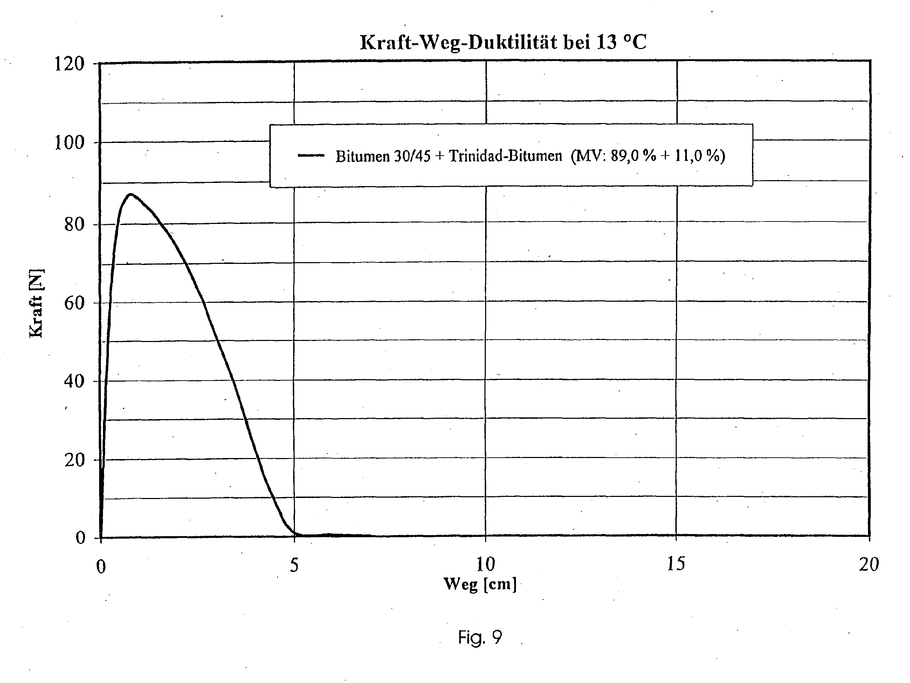

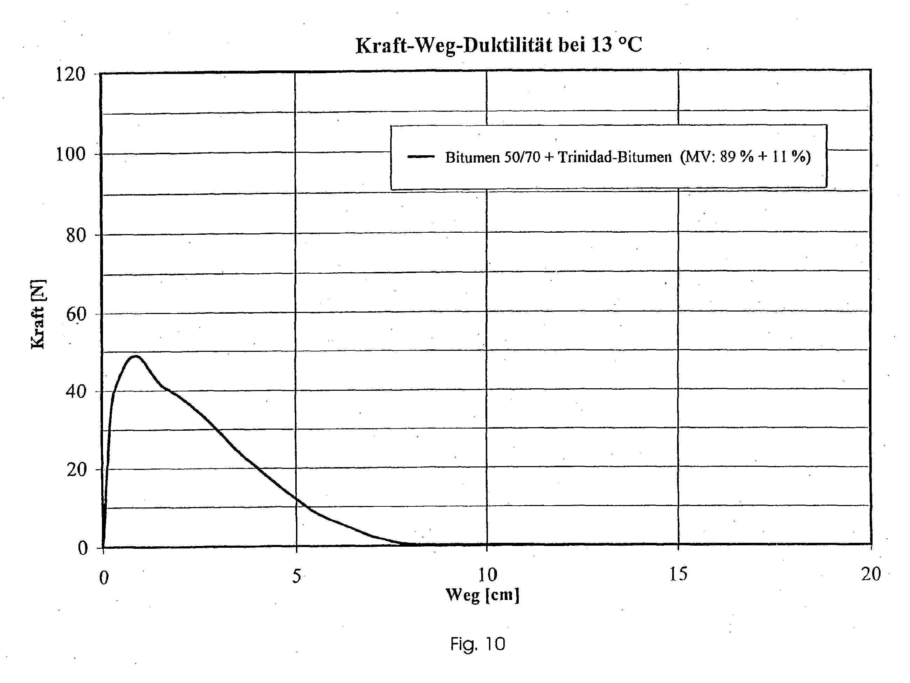

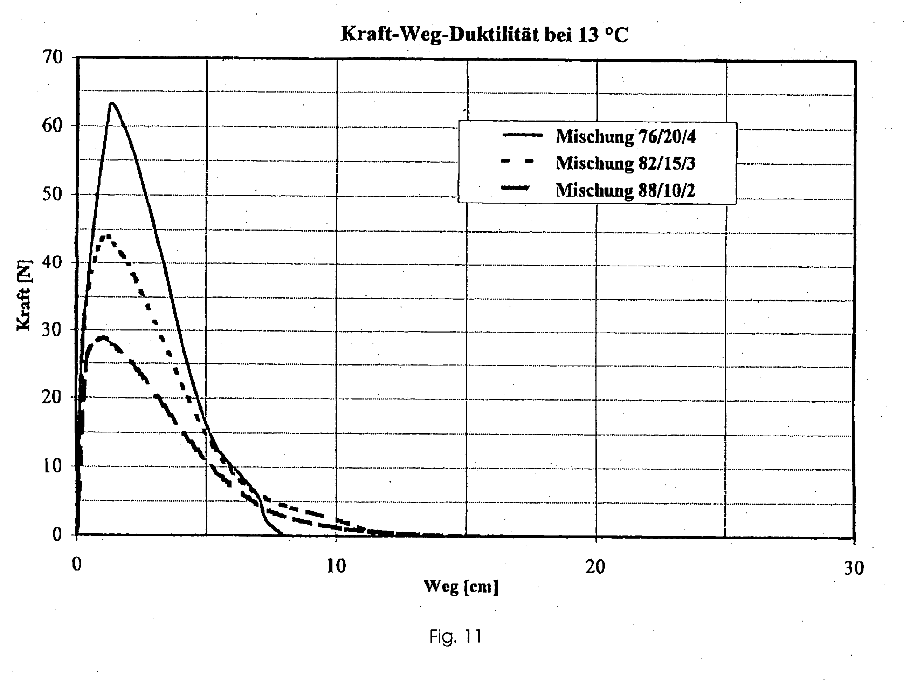

In den Figuren 1 bis 11 ist die Kraft-Weg-Duktilität wiedergegeben. Die Figuren 1 bis 8 betreffen die Beispiele 1 bis 8, die Figuren 9 bzw. 10 die Vergleichsbeispiele 1 bzw. 2. Fig. 11 betrifft die Beispiele 9 bis 11. Dargestellt ist jeweils das Verhalten beim Dehnungsversuch, d.h. der Verlauf der Kraft bis zum Bruch der Probe Die Duktilität (max. in N) ist der Wendepunkt des Verlaufs.

### Beispiele 12 und 13

Es wurden Gemische hergestellt, deren Zusammensetzung in Tabelle 3 angegeben ist. Mit den Gemischen wurden gemäß Kapitel 1.6.2 der ZTV Asphalt-StB erweiterte Eignungsprüfungen durchgeführt, die eine Beurteilung des Verformungswiderstandes, der Verdichtbarkeit und des Tieftemperaturverhaltens erlauben. Durchgeführt bzw. untersucht wurden die Spurbildung (Spurtiefe), das Kälteverhalten (Biegezugfestigkeit bei 20, 0 und -20 °C) sowie die Verdichtbarkeit (Dichte bzw. Hohlraumgehalte bei 110, 120, 130, 140 und 150 °C). Die Zusammensetzung ist wiederum aus Tabelle 3 zu entnehmen, die Untersuchungsergebnisse aus den Tabellen 4 und 5.

### Vergleichsbeispiel 4

Die Zusammensetzung entsprach Beispiel 9, enthielt jedoch nur Strassenbaubitumen 50/70 (siehe Tabelle 3). Es wurden die gleichen erweiterten Untersuchungen wie bei den Beispielen 12 und 13 durchgeführt.

### Diskussion der Untersuchungsergebnisse

Bei Vergleich von Beispiel 12 mit Vergleichsbeispiel 4 ergibt sich, dass das Beispiel 12 in allen Parameter besser ist als das Vergleichsbeispiel 4. Die Spurtiefe nimmt im Mittel um 3,13 mm ab, die Biegezugfestigkeit bei 0 und 20 °C um etwa jeweils praktisch gleichen Wert (0,48 bzw. 0,49) zu und bei -20 °C um etwa das Doppelte zu (0,82, Tabelle 4). Die Zunahme der Dichte beträgt im Bereich von 110 bis 150 °C 0,032 bis 0,013 g/cm3, die Abnahme des Hohlraumgehaltes 0,4 bis 1,3 Vol.-% (Tabelle 5).

**Tabelle 1**

| Zusammensetzung und Eigenschaften der Bindemittelgemische | | | | | | | | | |
|---|---|---|---|---|---|---|---|---|---|
| | **1 Straßenbaubitumen M.-%** | **2 Naturasphalt M.-%** | **3 Zusatz M.-%** | **4 Sum me M.-%** | **5 Erweichung °C** | **6 Penetration 0,1 mm** | **7 Bruch °C** | **8 Dukt. (13°C) cm** | **9 Dukt.max (13 °C) N** |
| **Penetrationssorte 30/45** | | | | | | | | | |
| Lucobit R (ECB) | | | | | | | | | |
| Beispiel 1 | 90,8 | 7,7 | 1,5 | 100,0 | 60,4 | 25 | -5 | 6 | 94 |
| Beispiel 2 | 82,0 | 15,0 | 3,0 | 100,0 | 64,4 | 13 | -4 | 1 | 90 |

| Sasobit | | | | | | | | | |
|---|---|---|---|---|---|---|---|---|---|
| Beispiel 3 | 91,5 | 7,7 | 0,8 | 100,0 | 61,6 | 19 | -4 | 6 | 120 |
| Beispiel 4 | 83,5 | 15,0 | 1,5 | 100,0 | 67,4 | 15 | -4 | 1 | 74 |
| Vergleichsbeispiel 1 | 89,0 | 11,0 | 0,0 | 100,0 | 59,0 | 18 | -7 | 7 | 87 |

| **Penetrationssorte 50/70** | | | | | | | | | |
|---|---|---|---|---|---|---|---|---|---|
| Lucobit R (ECB) | | | | | | | | | |
| Beispiel 5 | 90,8 | 7,7 | 1,5 | 100,0 | 57,4 | 27 | -13 | 13 | 52 |
| Beispiel 6 | 86,40 | 11,35 | 2,25 | 100,0 | 58,2 | 25 | -13 | 9 | 58 |
| Beispiel 7 | 82,0 | 15,0 | 3,0 | 100,0 | 60,2 | 23 | -12 | 8 | 75 |

| Sasobit | | | | | | | | | |
|---|---|---|---|---|---|---|---|---|---|
| Beispiel 8 | 91,5 | 7,7 | 0,8 | 100,0 | 56,2 | 37 | -9 | 16 | 52 |
| Vergleichsbeispiel 2 | 89,0 | 11,0 | 0,0 | 100,0 | 54,8 | 35 | -10 | 11 | 48 |

| **Penetrationssorte 70/100** | | | | | | | | | |
|---|---|---|---|---|---|---|---|---|---|
| Lucobit R (ECB) | | | | | | | | | |
| Beispiel 9 | 88,0 | 10,0 | 2,0 | 100,0 | 53,4 | 48 | -13 | 19 | 29 |
| Beispiel 10 | 82,0 | 15,0 | 3,0 | 100,0 | 55,8 | 44 | -15 | 12 | 44 |
| Beispiel 11 | 76,0 | 20,0 | 4,0 | 100,0 | 59,4 | 35 | -10 | 8 | 63 |
| Vergleichsbeispiel 3 | 100,0 | | | 100,0 | 48,4 | 76 | -21 | | |

| | | | | | | | | | |
|---|---|---|---|---|---|---|---|---|---|
| Hinweise: ¹⁾ Straßenbaubitumen der angebenen Penetrationssorten 30/45, 50/70 bzw. 70/100 nach EN DIN 12591 ²⁾ Trinidad Lake Asphalt ³⁾ Zusatz in Gestalt der Produkte Lucobit R (ECB) bzw. Sasobit ⁵⁾ Erweichungspunkt Ring und Kugel (EP RuK) in °C nach DIN EN 12591, 1427 ⁶⁾ Nadelpenetration bei 25 °C in 0,1 mm nach DIN EN 12591, 1426 ⁷⁾ Brechpunkt nach Fraaß: Temperatur in °C, bei der ein Bindemittelfilm vorgeschriebener Dicke, der auf ein Prüfblech aufgeschmolzen oder aufgepresst ist, bei vorgeschriebener Abkühlungsgeschwindigkeit und Biegebeanspruchnung bricht, DIN EN 12593 Wegstrecke in cm im Kraft/Weg-Verlauf gemäß den Figuren 1 bis 11, bei der die Probe bricht ⁹⁾ Maximalkraft in N im Kraft/Weg-Verlauf gemäß den Figuren 1 bis 11 | | | | | | | | | |

**Tabelle 2**

| Eigenschaftsverbesserungen der Bindemittelgemische | | | | | | |
|---|---|---|---|---|---|---|
| **Sorte** gemäß EN DIN 12591 | **EP RuK** | **Penet.** | **EP RuK** Bsp. 1-4 | **Penet.** Bsp. 1-4 | **EP RuK** Bsp. 5-8 | **Penet.** Bsp. 5-8 |
| | | | 30/45 | 30/45 | 50/70 | 50/70 |
| 160/220 | 35-43 | 160-220 | | | | |
| 70/100 | 43-51 | 70-100 | | | | |
| 50/70 | 46-54 | 50-70 | | | | |
| 30/45 | 52-60 | 30-45 | | | 54,8-60,2 | |
| 20/30 | 55-63 | 20-30 | 59,0-67,4 | 13-25 | | 23-37 |
| | | | Beispiele 1-4: Verbesserung um mehr als eine Sorte (beide Parameter) | | Beispiele 5-8: Verbesserung um eine (EPRuK) bzw. zwei Sorten (Penetr.) | |

**Tabelle 3**

| Zusammensetzung (M.-%) von Asphaltdeckschichten | | |
|---|---|---|
| **Komponente** | **Beispiel 12** | **Vgl.beispiel 4** |
| Diabas Edelsplitt 5/8 | 58,3 | 58,3 |
| Diabas Edelsplitt 2/5 | 15,7 | 15,7 |
| Diabas Edelbrechsand 0/2 | 9,3 | 9,3 |
| Kalksteinfüller | 7,8 | 9,3 |
| Cellulosefaser | 0,4 | 0,4 |
| Trinidad/Lucobit/Compound | | |
| Bindemittel | 0,6 | 0 |
| Füller | 1,5 | 0 |
| Bitumen 50/70 | 6,4 | 7,0 |
| Summe | 100,0 | 100,0 |

| **Komponente** | **Beispiel 13** | |
|---|---|---|
| Grauwacke Edelsplitt 11/16 | 31,5 | |
| Grauwacke Edelsplitt 8/11 | 14,3 | |
| Grauwacke Edelsplitt 5/8 | 10,5 | |
| Grauwacke Edelsplitt 2/5 | 11,5 | |
| Grauwacke Edelbrechsand 0/2 | 22,9 | |
| Kalksteinfüller | 3,9 | |

| Trinidad/Lucobit/Compound | | |
|---|---|---|
| Bindemittel | 0,4 | |
| Füller | 1,0 | |
| Bitumen 50/70 | 4,0 | |
| Summe | 100,0 | |

**Tabelle 4**

| Spurtiefe und Biegezugfestigkeit von Asphaltdeckschichten | | | | | | |
|---|---|---|---|---|---|---|
| **Spurtiefe, mm** | | **Beispiel 12** | **Vgl.beispiel 4** | **Differenz** | **Beispiel** 13 | |
| Probe 1 | | 0,93 | 3,50 | | 1,81 | |
| Probe 2 | | 1,20 | 4,89 | | 2,03 | |
| | Mittel | 1,07 | 4,20 | 3,13 | 1,92 | |

| **Biegezugfestigkeit, N/mm²** | | | | | | **Temperatur** |
|---|---|---|---|---|---|---|
| Probe 1 | | 2,99 | 2,38 | | 7,21 | |
| Probe 2 | | 2,89 | 2,47 | | 7,31 | |
| Probe 3 | | 2,85 | 2,41 | | 7,25 | |
| | Mittel | 2,91 | 2,42 | 0,49 | 7,26 | 20 °C |
| Probe 1 | | 9,23 | 9,92 | | 10,68 | |
| Probe 2 | | 9,59 | 8,52 | | 11,22 | |
| Probe 3 | | 9,97 | 8,92 | | 11,21 | |
| | Mittel | 9,60 | 9,12 | 0,48 | 11,04 | 0 °C |
| Probe 1 | | 10,93 | 10,62 | | 14,29 | |
| Probe 2 | | 10,81 | 9,85 | | 14,43 | |
| Probe 3 | | 11,02 | 9,82 | | 14,24 | |
| | Mittel | 10,92 | 10,10 | 0,82 | 14,32 | - 20 °C |

**Tabelle 5**

| Dichte und Hohlraumgehalt von Asphaltdeckschichten* | | | | | | |
|---|---|---|---|---|---|---|
| | **Dichte, g/cm³** | **Beispiel 12** | **Vgl.beispiel 4** | **Differenz** | **Beispiel 13** | **Temperatur** |
| Probe 1 | | 2,321 | 2,277 | | 2,260 | |
| Probe 2 | | 2,318 | 2,298 | | 2,293 | |
| | Mittel | 2,320 | 2,288 | 0,032 | 2,277 | 110 °C |
| Probe 1 | | 2,351 | 2,325 | | 2,280 | |
| Probe 2 | | 2,348 | 2,327 | | 2,301 | |
| | Mittel | 2,350 | 2,326 | 0,023 | 2,291 | 120 °C |
| Probe 1 | | 2,359 | 2,325 | | 2,320 | |
| Probe 2 | | 2,366 | 2,343 | | 2,314 | |
| | Mittel | 2,363 | 2,334 | 0,028 | 2,317 | 130 °C |
| Probe 1 | | 2,375 | 2,339 | | 2,366 | |
| Probe 2 | | 2,377 | 2,340 | | 2,344 | |
| | Mittel | 2,376 | 2,340 | 0,036 | 2,355 | 140 °C |
| Probe 1 | | 2,386 | 2,370 | | 2,389 | |
| Probe 2 | | 2,390 | 2,381 | | 2,419 | |
| | Mittel | 2,388 | 2,376 | 0,013 | 2,404 | 150 °C |

| **Hohlraumgehalt, Vol-%** | | | | | | |
|---|---|---|---|---|---|---|
| Probe 1 | | 6,7 | 6,8 | | 10,1 | |
| Probe 2 | | 6,8 | 5,9 | | 8,8 | |
| | Mittel | 6,8 | 6,4 | 0,4 | 9,5 | 110 °C |
| Probe 1 | | 5,5 | 4,8 | | 9,3 | |
| Probe 2 | | 5,6 | 4,8 | | 8,4 | |
| | Mittel | 5,6 | 4,8 | 0,8 | 8,9 | 120 °C |
| Probe 1 | | 5,2 | 4,8 | | 7,7 | |
| Probe 2 | | 4,9 | 4,1 | | 7,9 | |
| | Mittel | 5,1 | 4,5 | 0,6 | 7,8 | 130 °C |
| Probe 1 | | 4,5 | 4,2 | | 5,8 | |
| Probe 2 | | 4,5 | 4,2 | | 6,7 | |
| | Mittel | 4,5 | 4,2 | 0,3 | 6,3 | 140 °C |
| Probe 1 | | 4,1 | 3,0 | | 4,9 | |
| Probe 2 | | 3,9 | 2,5 | | 3,7 | |
| | Mittel | 4,0 | 2,8 | 1,3 | 4,3 | 150 °C |

| | | | | | | |
|---|---|---|---|---|---|---|
| *gemessen an Marshall-Probekörpern nach DIN 1996, Teil 3 | | | | | | |

## Patentansprüche

1. Bitumenhaltiges Bindemittelgemisch, enthaltend
Straßenbaubitumen, Naturasphalt und gegebenenfalls weitere übliche Zusätze,
**gekennzeichnet durch**
einen Gehalt eines Ethylen Copolymer Bitumens von 0,1 bis 15 M.-%, bezogen auf die Summe aus Straßenbaubitumen, Naturasphalt und Ethylen Copolymer Bitumen.

2. Bindemittelgemisch nach Anspruch 1, **dadurch gekennzeichnet, dass** das Straßenbaubitumen ein Bitumen der Penetrationssorten 30/45, 50/70 oder 70/100 nach DIN EN 12591 ist.

3. Bindemittelgemisch nach Anspruch 2, **gekennzeichnet durch** folgende Zusammensetzung:
78 bis 97 M.-% Straßenbaubitumen
2 bis 20 M.-% Naturasphalt
Rest Ethylen Copolymer Bitumen.

4. Bindemittelgemisch nach Anspruch 2, **gekennzeichnet durch** folgende Zusammensetzung:
83 bis 92 M.-% Straßenbaubitumen
7 bis 15 M.-% Naturasphalt
Rest Ethylen Copolymer Bitumen.

5. Bindemittelgemisch nach einem der vorhergehenden Ansprüche, **dadurch gekennzeichnet, dass** der Naturasphalt Trinidad Lake Asphalt ist.

6. Bindemittelgemisch nach Anspruch 4, **dadurch gekennzeichnet, dass** der Wachsgehalt 0,5 bis 10 M.-% beträgt.

7. Verfahren zur Herstellung eines bitumenhaltiges Bindemittelgemisches nach einem der vorhergehenden Ansprüche,
**dadurch gekennzeichnet, dass**
das Straßenbaubitumen und der Naturasphalt durch Rühren gemischt und das Ethylen Copolymer Bitumen in das entstandene Gemisch eingerührt wird.

8. Verfahren nach Anspruch 7, **dadurch gekennzeichnet, dass** Rühren und Einmischen bei einer Temperatur von 90 bis 260 °C erfolgen.

9. Verfahren nach Anspruch 7 oder 8, **dadurch gekennzeichnet, dass** Rühren und Einmischen in einem Korbrührer bei einer Rührgeschwindigkeit von 230 bis 270 min⁻¹ erfolgen.

10. Verfahren nach einem der Ansprüche 6 bis 9, **dadurch gekennzeichnet, dass** das Mischen von Straßenbaubitumen und Naturasphalt über einem Zeitraum von 8 bis 12 min und das Einrühren des Ethylen Copolymer Bitumens über einem Zeitraum von 13 bis 17 min erfolgt.
